# EUROPEAN PATENT APPLICATION

(11) **EP 0 543 663 A1**
(43) Date of publication of application: **26.05.1993**
(21) Application number: 92310628.0
(22) Date of filing: 20.11.1992
(51) Int. Cl.: H01B 3/28, H01B 3/04, C08L 7/00, C08K 3/34

(54) **Rubber blends comprising EPDM and mica for electrically resistant materials**

(30) Priority: 21.11.1991 US 795694
(71) Applicant: ELECTRIC POWER RESEARCH INSTITUTE, Palo Alto, California 94303 (US)
(72) Inventor: Mueller, William, Powell, Ohio 43065 (US); Mirich, William, Worthingon, Ohio 4385 (US)
(74) Representative: Geering, Keith Edwin

(57) **Abstract**

Electrical insulative blends of natural rubber, filler and synthetic polymer formed of ethylene and propylene and, if desired, a diene are disclosed. These compositions can be used to form equipment with electrical resistive properties to protect against electrical shock.

## Description

The invention relates to novel compositions consisting of blends of natural rubber, filler and synthetic polymer.

For repairmen, linesmen or others working around high voltage wires and equipment, it is often necessary to wear protective gloves, to protect the person from accidental contact with a live wire or equipment. Similarly, electrically resistant blankets and sleeves are also used by repairmen, linesmen and others working around electrical equipment. It is therefore important that equipment and other materials to protect those working around electrical equipment have superior electrical insulative properties.

In addition to superior insulative properties, flexibility of the gloves or equipment is required because it is often necessary for such a person to handle very small objects, such as screws, bolts, nuts, and the like.

Gloves of different compositions may be used in combination. For example, an inner glove of natural rubber, to give high voltage protection, may be worn with an outer glove of leather, which gives resistance to tearing by protecting the rubber. However, the leather and rubber glove combination makes the glove very inflexible, as it prevents folding and buckling of the rubber which in turn is then resistant to flexing. As a result there is a tendency for users to remove their gloves when handling small items. Currently used products are also heavy, lack breathability, and are brittle when cold.

Thus, it would be beneficial if gloves and electrical protective equipment could be fashioned with improved electrical resistance and greater flexibility, while at the same time being lighter, breathing better and not exhibiting brittleness when cold.

This invention generally relates to the preparation of insulating compositions, particularly for use in protective equipment for repairmen, linemen and others working around electrical equipment, such as gloves, blankets and sleeves and similar equipment. Currently used rubber for such equipment would benefit by enhancement of its insulative, and abrasion and puncture resistive properties, as well as by enhancement of the flexibility and other desirable properties of such equipment.

For example, natural rubber gloves have superior electrical resistive properties, but are susceptible to degradation by sunlight, ozone and oils. Efforts to produce better equipment by coating natural rubber items with leather, cloth or EPDM has not been successful due to poor flexibility and delamination.

Another problem experienced with current rubber formulations is due to the spherical nature of clay particles typically used which contributes to electrical leakage. The substitution of other filler substances, alone or in combination, for clay might provide enhanced electrical resistive properties of rubber compositions.

This invention provides improved rubber-based blends exhibiting beneficial properties, e.g. one or more of good electrical resistive properties, resistance to abrasion and puncture, and resistance to delamination. The invention involves novel flexible, electrical resistant compositions comprising blends of polymers and natural rubber, with the use of mica as a preferred filler, alone or in combination with clay. Said polymers preferably comprise ethylene and propylene and, where desired, diene. The diene is preferably selected from the group consisting of methylidene norbornene, ethylidene norbornene, and mixtures thoreof. These compositions are produced using fillers, such as mica, antioxidants, mold release agents and curing systems.

A variety of flexible, electrical insulating materials, particularly gloves, sleeves and blankets for repairmen, linesmen and others working around electrical equipment or susceptible to electrical shock, may be formed from the compositions of this invention.

The compositions of this invention are based on a physical blend of natural rubber, a filler and a synthetic polymer. These compositions allow the production of flexible, electrical resistant materials such as gloves, sheets and the like.

In a preferred embodiment, the synthetic polymers of this invention are formed by polymerizing ethylene and propylene; useful terpolymers will also contain a diene. Dienes are a class of organic compounds containing two ethylenic linkages (carbon-carbon double bonds) in the molecules. Presently preferred dienes will be selected from the group of norbornenes including methylidene norbornene, ethylidene norbornene, and mixtures thereof.

In the preferred embodiment, the blends useful for the practice of this invention are formed of terpolymers of ethylene, propylene and diene in the range from about 29 wt% to about 80 wt% ethylene, from about 10 wt% to about 70 wt% propylene, and from about 1 wt% to about 10 wt% diene. Such terpolymers are commercially described as EPDM. In the presently preferred embodiment, the EPDM is Nordel (Sold as "Nordel 1320"; DuPont Corporation, Wilmington, Del.).

In another embodiment, a copolymer is used to produce a composition of this invention. Useful copolymers include, for example, an ethylene-propylene copolymer well known in the art as ethylene-propylene rubber (EPR). Although EPR and other copolymers will be useful in the practice of this invention, EPR and other polymers types lacking diene are slower curing than those containing diene. Other properties, such as electrical properties and ethylene-propylene ratios in the polymers, will be approximately equivalent.

Natural rubbers are formed from the collection and coagulation of latex. Natural rubbers of this invention are high purity grade rubbers, which display superior electrical properties, tensile and tear strength. Grade #IRSS (No. 1 ribbed smoked sheet) meets this description and is useful for the practice of this invention, and SMR (standard Malaysian rubber) and polyisoprene (synthetic rubber) may also be useful with this invention.

In the preferred embodiment, blends with ratios of from 40 weight percent (wt%) EPDM to about 60 wt% natural rubber, to blends of about 80 wt% EPDM to about 20 wt% natural rubber can be used to form the compositions of this invention. In the presently preferred embodiment, blends of 60 wt% EPDM to about 40 wt% natural rubber are used.

Fillers are inert materials that may be used to modify the properties and enhance the qualities of the compositions of this invention. In currently used electrical insulating materials, clay is typically the filler of choice. However, particles of clay are more or less spherical, and thus provide a less-resistive pathway through a material than other potential fillers.

For improved electrical resistance a plate-like particle, such as mica, would be preferred. Since the mica particles are not electrically conductive, the use of mica should increase the length of the electrical path through a composition containing the mica, thus increasing insulating resistance.

Fillers are included in the compositions of this invention to enhance electrical resistance, enhance tensile and tear strength and to regulate other properties, and to improve the processing by reducing the nerve of the polymers; this results in sheets, extrusions, or molded products with a smoother surface.

In the preferred embodiments, fillers may be added at levels of about 5-100 phr (parts per hundred, based on the natural rubber), depending upon the filler type and the properties required in the product. Where maximum insulating properties are required, such fillers must be carefully selected based on the electrical properties of the fillers.

Thus, in the presently preferred embodiments, mica can be used as the sole filler at concentrations of 5-40 phr, or may be used in combination with clay. The presently preferred compositions contain about 10 phr each of clay and mica.

In compositions of the present invention a variety of other components may be added to contribute desirable characteristics to the composition. Antioxidants, mold release agents, and various other components and agents known to those skilled in the art may be added.

For example, antioxidants are incorporated into rubber compositions to increase resistance to aging by molecular oxygen, resulting in less deterioration of properties. Antioxidants are particularly important when using natural rubber, which is more susceptible to air aging than is EPDM or EPR. A variety of antioxidants are known in the art, such as amines, diamines and phenols, and may be used with the compositions of this invention. However, the presently preferred antioxidant is polymerized 2,2,4-trimethyl-1,2 dihydroquinoline sold under the tradename of "Agerite Resin D" (R. T. Vanderbilt Company). Preferred concentrations are in the range of about 1-5 phr, although a variety of concentrations may be used.

Mold release agents are also widely used in rubber formulations. The compounds are lubricants, such as waxes or silicon oils, used to coat a mold cavity to prevent the molded piece from sticking when removed. these compounds are applied either as components of the formulations, or externally as a mold spray; either type may be useful for compositions of this invention.

In the preferred embodiment, the use of internal release agents was found to be more convenient, with the presently preferred agent being a partial ester of phosphoric acid sold commercially as an antistat ("RD-510"; GAF Corporation), blended with the rubber, EPDM and filler before curing. The presently preferred concentration is about 1 phr, but concentrations of 0-3 phr or greater may also be used for the compositions of this invention.

Finally, compositions of this invention require a curing system. Curing agents, or hardeners, are compounds reacted with a resin polymer to harden or cross-link the polymer. These can be amines or peroxides that react to cure or harden the polymers.

Natural rubber is usually cured with a sulfur-based system, while EPDM and EPR are often cured with a peroxide. Because of the use of a blend for the rubber compositions disclosed herein, the presently preferred curing system is based on a mixture of sulfur and peroxide. Thus, a preferred curing system will consist of about 1-3 phr sulfur and about 2-4 phr of dicumyl peroxide (sold as Varox DCP-R by R. T. Vanderbilt Company). In the presently preferred embodiment, about 2 phr sulfur and about 3 phr of dicumyl peroxide is used.

Ingredients of the rubber compositions of this invention may be mixed together either on an open mill or in an internal mixer, following standard rubber industry practices. A presently preferred mixing cycle consists of the steps of (1) banding the natural rubber on the mill roll to form banded natural rubber, (2) adding the synthetic polymer, (3) adding the filler, (4) adding all other ingredients, including antioxidants and mold release agents, except curing agents, and (5) adding the curing agents. A different ordering of the steps, i.e., adding the other ingredients before adding the filler, may also be employed to produce the compositions of this invention.

During milling, the preferred batch temperature is kept below about 65°C to prevent any premature curing (called scorching); the presently preferred batch temperature will be below about 50°C.

Test specimens for electrical or other tests may be prepared, for example, by curing the mixed composition for about 10-30 minutes at about 140 - 160°C in a compression type mold, although other curing methods such as steam, hot air and a variety of other methods may also be used and are well known in the art.

The following example is provided for clarification, and is not intended to limit in any way the scope of this invention.

### Example 1

Natural rubber was milled on a 2-roll laboratory mill for 5-10 minutes until it formed a smooth band around one roll. The EPDM terpolymer (approximately 50 percent ethylene, 45% Propylene and 5% Diene) was added to the natural rubber band in 4 or 5 increments (approximately equal) and the two polymers milled together for 5-10 minutes to form a smooth sheet. The mill opening was adjusted to obtain a rolling bank between the two rolls. At this time, the filler (clay, mica, or a mixture of the two) was slowly added to the rolling bank to incorporate these materials into the polymer (3-5 minutes). The antioxidant (Agerite Resin D) and mold release agent (RD-510) were added over a period of about 3-5 minutes. At this point, the batch temperature should not exceed 50°C. When it did, cooling water was used to reduce the batch temperature to about 50°C. The sulfur was then added over a period of 2-3 minutes, followed by the addition of peroxide over another 2-3 minutes.

After addition of the peroxide, the batch was cut with a mill knife alternately from each side for about 3/4 the width of the batch, and the cut material was returned to the nip of the rolls. When all of the material was well dispersed, the batch was cut from the rolls, rolled up, and fed endwise between the rolls. This was done five or six times over a period of 3-5 minutes. The batch was then cut from the rolls and set aside for cooling and curing.

Curing was done in a compression type mold having cavities suitable for the particular tests to be run. Typical laboratory molds have cavities 6 x 6 x 0.075-inch. Pressure on the mold was 400 - 600 psi, with temperatures of 140 - 160°C. Curing time varied from 10-30 minutes depending upon the curing system used.

A composition prepared in this manner consisted of the following (parts by weight):

| | |
|---|---|
| EPDM (Nordel 1320) | 70 |
| Natural Rubber (#IRSS) | 30 |
| Mica | 10 |
| Clay | 10 |
| Antioxidant (Agerite Resin D) | 2 |
| Mold Release (RD-510) | 1 |
| Sulfur | 1.6 |
| Dicumyl peroxide (Varox DCP-R) | 3.5 |

### Example 2

The same milling and mixing practice used in Example 1 is used to produced a composition containing a copolymer, with the following modifications.

EPR is added (approximately 50% ethylene, 50% propylene) to the rubber band in 4 or 5 increments. The filler and antioxidant are added in the same fashion, and the temperature of the process is held in the ranges given in Example 1. Curing is done in a compression type mold having cavities suitable for the particular tests to be run. Pressure on the mold is 400 - 600 psi, and the temperature is held at 140 - 160°C. Curing time varies from 20-40 minutes depending upon the curing system used.

A composition prepared in this manner consisted of the following (parts by weight):

| | |
|---|---|
| EPR | 70 |
| Natural Rubber (#IRSS) | 30 |
| Mica | 10 |
| Clay | 10 |
| Antioxidant (Agerite Resin D) | 2 |
| Mold Release (RD-510) | 1 |
| Sulfur | 1.6 |
| Dicumyl peroxide (Varox DCP-R) | 3.5 |

Many modifications and variations are possible, both in the materials used, the relative quantities of each component, and even in the order of adding components of the composition.

## Claims

1. A flexible electrical insulating composition comprising a blend of natural rubber, filler comprising an electrical resistance enhanching amount of mica and synthetic ethylene/propylene copolymer.

2. A composition according to claim 1 wherein said copolymer comprises terpolymer, e.g. ethylene/propylene/diene terpolymer where said diene preferably comprises norbornene, most preferably selected from methylidene and ethyliden norbornenes and mixtures thereof.

3. A composition according to claim 2 wherein said terpolymer is formable by polymerizing about 29 wt.% to about 80 wt.% ethylene, about 10 wt.% to about 70 wt.% propylene and about 1 wt.% to about 10 wt.% diene

4. A composition according to claim 1 wherein said synthetic polymer is formable by polymerizing about 30 wt.% to about 80 wt.% ethylene and about 20 wt.% to about 70 wt.% propylene.

5. A composition according to any preceding claim containing about 20-60 wt.% natural rubber and about 40-80 wt.% synthetic polymer.

6. A composition according to any preceding claim wherein (a) the concentration of said filler is about 5 phr to about 100 phr; or (b) said filler comprises mica in a concentration of about 10 phr to about 40 phr, or (c) said filler comprises mica and clay in respective amounts of about 5 phr to about 40 phr and about 5 phr to about 40 phr.

7. A composition according to any preceding claim including one, two or all of (a) antioxidant selected from amines, diamines and phenols (e.g. polymerized 2,2,4-trimethyl-1,2-dihydroquinoline); (b) mold release agent (e.g. partial ester of phosphoric acid); and (c) curing agent (e.g. comprising sulfur at about 1 phr to about 3 phr and dicumyl peroxide at about 2 phr to about 4 phr).

8. A composition according to any preceding claim in a cured state.

9. A method of preparing a flexible electrical insulating composition comprising banding natural rubber on a mill roll to produce banded natural rubber, adding to said banded natural rubber, preferably in sequence, (i) synthetic polymer (preferably comprising terpolymer and/or comprising copolymer comprising ethylene and propylene), (ii) filler comprising an electrical resistance enhancing amount of mica, and (iii) antioxidant and curing agent and optionally mold release agent to form an uncured composition, and curing said uncured composition (preferably in a mold).

10. A composition according to any of claims 1 to 8, or obtainable by a method according to claim 9, in the form of a sheet, sleeve or glove.
